# EUROPÄISCHE PATENTSCHRIFT

(11) **EP 3 338 547 B1**
(45) Veröffentlichungstag und Bekanntmachung des Hinweises auf die Patenterteilung: **24.06.2020**
(21) Anmeldenummer: 17401125.4
(22) Anmeldetag: 07.12.2017
(51) Int. Cl.: A01M 7/00

(54) **LANDWIRTSCHAFTLICHE FELDSPRITZE**
AGRICULTURAL FIELD SPRAYING DEVICE
PULVÉRISATEUR AGRICOLE

(30) Priorität: 22.12.2016 DE 102016125310
(43) Veröffentlichungstag der Anmeldung: 27.06.2018
(73) Patentinhaber: Amazonen-Werke H. Dreyer GmbH & Co. KG, 49205 Hasbergen (DE)
(72) Erfinder: Reisser, Fabian, 59439 Holzwickede (DE); Austermann, Stefan, 48291 Telgte (DE); Lampe, Toivo, 49080 Osnabrück (DE)

(56) Entgegenhaltungen:
- EP-A1- 0 086 029
- EP-A1- 1 428 433
- EP-A2- 2 223 594
- EP-A2- 2 425 714
- US-A- 2 273 344
- US-A- 4 456 176

## Beschreibung

Die Erfindung betrifft eine landwirtschaftliche Feldspritze nach dem Oberbegriff des Patentanspruchs 1 und ein Verfahren zum Betreiben einer landwirtschaftlichen Feldspritze nach dem Oberbegriff des Patentanspruchs 5.

Eine landwirtschaftliche Feldspritze und ein Verfahren zum Betreiben einer landwirtschaftlichen Feldspritze nach den Oberbegriffen der Ansprüche 1 und 5 sind durch die EP 2 425 714 A2 bzw. EP 0 086 029 A1 bekannt.

Landwirtschaftliche Feldspritzen dienen beispielsweise dem Ausbringen von flüssigen Wirkstoffmitteln auf einen Nutzpflanzenbestand. Die auszubringende Flüssigkeit befindet sich üblicherweise in einem Vorratstank, welcher fluidleitend mit Spritzdüsen verbunden ist, über welche die Flüssigkeit abgegeben wird.

Zwischen dem Vorratstank und den Spritzdüsen kann ein Saugbereich angeordnet sein, welcher einen oder mehrere Saugleitungsabschnitte umfasst und dazu eingerichtet ist, Flüssigkeit aus dem Vorratstank anzusaugen. Über eine Pumpe und einen Druckbereich wird die Flüssigkeit dann den Spritzdüsen zugeführt.

Zur Reinigung der Armaturen einer landwirtschaftlichen Feldspritze ist nach Beendigung eines Spritzvorgangs zurückbleibende Flüssigkeit aus dem Saugbereich abzuführen. Hierbei ergibt sich das Problem, dass die Pumpe der landwirtschaftlichen Feldspritze zum Abführen der zurückbleibenden Flüssigkeit aus dem Saugbereich nicht geeignet ist, da während der Reinigung aufgrund der geringen Flüssigkeitsmenge Luft angesaugt werden würde, wodurch eine vollständige Entleerung des Saugbereichs verhindert wird.

Es sind bereits Lösungen bekannt, welche separate Entleerungseinrichtungen aufweisen. Die Entleerungseinrichtungen sind dazu eingerichtet, nach Beendigung eines Spritzvorgangs in dem Saugbereich zurückbleibende Flüssigkeit aus dem Saugbereich abzuführen. Die Druckschrift DE 10 2013 108 181 A1 schlägt hierzu einen Ablasshahn vor, welcher zum Ablassen von gesammelter Flüssigkeit aus einer Entleerungskammer dient. Die Entleerungskammer ist dabei derart angeordnet, dass sich die in dem Saugbereich zurückbleibende Flüssigkeit aufgrund der Schwerkraftwirkung nach Beendigung eines Spritzvorgangs in der Entleerungskammer sammelt.

Diese und andere bekannte Lösungen haben den Nachteil, dass die in dem Saugbereich zurückbleibende Flüssigkeit in einen externen Behälter abgelassen wird und nach der Entleerung zu entsorgen ist. Somit kann die zurückbleibende Flüssigkeit nicht auf den Nutzpflanzenbestand ausgebracht werden. Außerdem führt die Notwendigkeit des Ablassens und Entsorgens der in dem Saugbereich zurückbleibenden Flüssigkeit zu einem hohen Aufwand, welchen es im Hinblick auf eine angestrebte Effektivitätssteigerung zu vermeiden gilt.

Die der Erfindung zugrunde liegende Aufgabe besteht somit darin, die Restmengenentleerung einer landwirtschaftlichen Feldspritze nach Beendigung eines Spritzvorgangs zu verbessern und zu vereinfachen.

Die Aufgabe wird gelöst durch eine landwirtschaftliche Feldspritze der eingangs genannten Art, wobei die Entleerungseinrichtung der erfindungsgemäßen landwirtschaftlichen Feldspritze eine Entleerungskammer aufweist, in welcher sich die aus dem Saugbereich abgeführte Flüssigkeit sammelt und welche mit einer Druckluftquelle verbunden ist.

Die Lösung der Aufgabe erfolgt erfindungsgemäß durch die Merkmale der unabhängigen Ansprüche 1 und 5. Vorteilhafte Ausgestaltungen der Erfindung sind in den Unteransprüchen angegeben.

Die Erfindung macht sich die Erkenntnis zunutze, dass die Entleerungskammer der Entleerungseinrichtung über die Verbindung zu der Druckluftquelle mit Druckluft beaufschlagt werden kann, sodass die Druckluft nach der Beendigung eines Spritzvorgangs zum Abführen der Flüssigkeit verwendet werden kann, welche sich in der Entleerungskammer gesammelt hat. Abhängig von der Konfiguration der landwirtschaftlichen Feldspritze kann die mit Druckluft beaufschlagte Flüssigkeit beispielsweise Ausbringelementen zugeführt werden, sodass die in dem Saugbereich zurückbleibende Flüssigkeit durch die Druckluftbeaufschlagung auf den Nutzpflanzenbestand ausgebracht werden kann. Die Reinigung der landwirtschaftlichen Feldspritze wird somit erheblich verbessert und vereinfacht. Zwischen dem Tank und der Entleerungseinrichtung kann innerhalb des Saugbereichs eine Durchflussregelarmatur, insbesondere ein Absperrhahn, angeordnet sein. Die Durchflussregelarmatur kann mit einem weiteren Tank, insbesondere einem Spülwassertank, verbunden sein. Durch das Spülwasser in dem Spülwassertank können pulverförmige Wirkstoffe und größere Mengen von granuliertem Dünger schnell und sicher aufgelöst werden. Über die Durchflussregelarmatur können beispielsweise verschiedene Funktionen eingestellt werden, insbesondere eine oder mehrere Ansaug-Funktionen, eine Spritz-Funktion und/oder eine Spül-Funktion. Der Saugbereich kann außerdem eine Filtereinrichtung aufweisen. Die Filtereinrichtung kann dazu eingerichtet sein, die den Saugbereich durchströmende Flüssigkeit zu filtern. Insbesondere kann die Filtereinrichtung des Saugbereichs oder ein Teil der Filtereinrichtung des Saugbereichs von außerhalb der landwirtschaftlichen Feldspritze zugänglich und/oder auswechselbar sein. Vorzugsweise ist die Entleerungskammer der Entleerungseinrichtung derart angeordnet, dass die in dem Saugbereich zurückbleibende Flüssigkeit drucklos in die Entleerungskammer fließen kann.

So weist die landwirtschaftliche Feldspritze, einen Druckbereich weist, welcher ein oder mehrere Ausbringelemente umfasst, wobei das eine oder die mehreren Ausbringelemente dazu eingerichtet sind, die Flüssigkeit aus dem Tank auf eine landwirtschaftliche Nutzfläche auszubringen und wobei zwischen dem Druckbereich und dem Saugbereich eine Fördereinrichtung angeordnet ist. Das eine oder die mehreren Ausbringelemente können beispielsweise an einem einklappbaren Gestänge angeordnet und/oder als Spritzdüsen ausgebildet sein. Die Fördereinrichtung kann beispielsweise als Pumpe ausgebildet sein. Die Pumpe kann eine Kolbenmembranpumpe sein. Kolbenmembranpumpen sind trockenlaufsicher, flüssigdüngerfest und sorgen bei hoher Ansaugleistung für eine gleichmäßige Förderung. Der Druckbereich kann eine Filtereinrichtung aufweisen. Die Filtereinrichtung kann dazu eingerichtet sein, die den Druckbereich durchströmende Flüssigkeit zu filtern. Insbesondere kann die Filtereinrichtung des Druckbereichs oder ein Teil der Filtereinrichtung des Druckbereichs von außerhalb der landwirtschaftlichen Feldspritze zugänglich und/oder auswechselbar sein. Der Druckbereich kann über eine Rückflussleitung mit dem Tank fluidleitend verbunden sein. Über die Rückflussleitung kann zumindest ein Teil der in dem Druckbereich befindlichen Flüssigkeit zurück in den Tank gefördert werden. Innerhalb des Druckbereichs kann zwischen der Rückflussleitung und der Fördereinrichtung und/oder zwischen dem einen oder den mehreren Ausbringelementen und der Fördereinrichtung eine Durchflussregelarmatur, insbesondere ein Absperrhahn, angeordnet sein. Über die Durchflussregelarmatur können beispielsweise verschiedene Funktionen eingestellt werden, insbesondere eine Spritz-Funktion, eine Einspül-Funktion und/oder eine oder mehrere Reinigungs-Funktionen.

Die Entleerungseinrichtung weist ein Sicherheitsventil auf, welches dazu eingerichtet ist, eine Beaufschlagung des Saugbereichs mit Überdruck zu verhindern. Der Überdruck bildet sich innerhalb der Entleerungseinrichtung insbesondere dann aus, wenn die Entleerungskammer mit Druckluft der Druckluftquelle beaufschlagt wird. Vorzugsweise ist das Sicherheitsventil ein selbsttätig schaltendes Ventil, welches den Ventilzustand abhängig von dem Druck an der Ventileingangsseite, der Ventilausgangsseite und/oder dem Druckverhältnis zwischen der Ventileingangsseite und der Ventilausgangsseite ändert. Hierbei ist das Sicherheitsventil als Rückschlagventil ausgebildet. Vorzugsweise ist das Rückschlagventil als federbelastetes Rückschlagventil ausgebildet. Insbesondere weist das Sicherheitsventil eine Kugel, einen Kegel, eine Klappe oder eine Membran auf, welche zur Unterbrechung des Fluidflusses von der Entleerungskammer in den Saugbereich der landwirtschaftlichen Feldspritze in einen Ventilsitz des Sicherheitsventils drückbar sind. Durch das Rückschlagventil wird die Beaufschlagung des auf Unterdruck ausgelegten Saugbereichs mit einem zu hohen Druckniveau effektiv vermieden, sodass einer Beschädigung des Saugbereichs durch die Druckluftbeanspruchung der Entleerungskammer vorgebeugt wird.

Die erfindungsgemäße landwirtschaftliche Feldspritze wird außerdem dadurch vorteilhaft weitergebildet, dass zwischen der Druckluftquelle und der Entleerungskammer ein Absperrventil angeordnet ist. Durch das Absperrventil kann die Druckluftzufuhr in die Entleerungskammer freigegeben und unterbrochen werden. Wenn das Absperrventil geöffnet wird, kommt es zu einer Beaufschlagung der Entleerungskammer mit Druckluft, wodurch die in der Entleerungskammer befindliche Flüssigkeit aus der Entleerungskammer abtransportiert wird. Durch den Druckanstieg in der Entleerungskammer wird vorzugsweise außerdem der Schließvorgang des Sicherheitsventils eingeleitet. Der Saugbereich wird somit vor einer Beschädigung durch die Druckluft geschützt. Wenn das Absperrventil wieder geschlossen wird, wird die Druckluftzufuhr in die Entleerungskammer unterbrochen. Das Druckniveau in der Entleerungskammer fällt daraufhin wieder ab, sodass sich das Sicherheitsventil nach einer Unterschreitung eines Druckgrenzwertes wieder öffnet. Auf diese Weise kann sich weitere in dem Saugbereich zurückgebliebene Flüssigkeit in der Entleerungskammer sammeln. Der Abführvorgang kann beliebig oft wiederholt werden, bis sämtliche Flüssigkeit aus dem Saugbereich abgeführt ist.

In einer anderen Ausführungsform der erfindungsgemäßen landwirtschaftlichen Feldspritze ist die Druckluftquelle als Druckluftbehälter oder als Druckluftversorgung ausgebildet. Ein Druckluftbehälter umfasst einen begrenzten Vorrat an Druckluft, welcher zum Abführen der Flüssigkeit aus der Entleerungskammer zur Verfügung steht. Mittels eines Druckluftbehälters lässt sich die Druckluftentleerung auf besonders kostengünstige Weise umsetzen. Alternativ kann eine Druckluftversorgung kontinuierlich Druckluft erzeugen und zur Verfügung stellen. Insbesondere umfasst die Druckluftversorgung einen Kompressor. Die zur Verfügung stehende Druckluftmenge ist somit nicht begrenzt, sodass auch mehrere Entleerungszyklen umgesetzt werden können und/oder eine großvolumige Entleerungskammer mit ausreichend Druckluft beaufschlagt werden kann. Die von dem Kompressor erzeugte Druckluft kann auch in dem Druckluftbehälter zwischengespeichert werden.

In einer weiteren bevorzugten Ausführungsform der erfindungsgemäßen landwirtschaftlichen Feldspritze ist die Entleerungskammer fluidleitend mit dem einen oder den mehreren Ausbringelementen verbunden, wobei die in der Entleerungskammer befindliche Flüssigkeit bei Druckbeaufschlagung durch die Druckluftquelle dem einen oder den mehreren Ausbringelementen zugeführt wird. Durch das Zuführen der in der Entleerungskammer befindlichen Flüssigkeit zu dem einen oder den mehreren Ausbringelementen, kann die in dem Saugbereich zurückgebliebene Restmenge der Flüssigkeit noch ausgebracht werden. Bei Bedarf, beispielsweise zum Zweck einer besseren Reinigung, kann die in dem Saugbereich verbliebene Restmenge mit Spülwasser aus dem Spülwassertank verdünnt werden. Durch die Zuführung der in der Entleerungskammer befindlichen Flüssigkeit zu dem einen oder den mehreren Ausbringelementen ist ein Ablassen der Flüssigkeit in einen externen Behälter und eine Entsorgung nicht notwendig ist. Auf diese Weise wird der Flüssigkeitsbedarf verringert und die Effektivität der landwirtschaftlichen Feldspritze gesteigert. Zudem geht keine mit Wirkstoffmitteln versetzte Flüssigkeit verloren.

Die der Erfindung zugrunde liegende Aufgabe wird außerdem gelöst durch ein Verfahren der eingangs genannten Art, wobei das erfindungsgemäße Verfahren das Beaufschlagen der Entleerungskammer mit Druckluft umfasst. Durch die Beaufschlagung der Entleerungskammer mit Druckluft kann die Flüssigkeit aus der Entleerungskammer abgeführt werden. Hinsichtlich der Vorteile und Modifikationen des erfindungsgemäßen Verfahrens wird auf die Vorteile und Modifikationen der erfindungsgemäßen landwirtschaftlichen Feldspritze verwiesen.

Das erfindungsgemäße Verfahren umfasst, das Beaufschlagen der Flüssigkeit in einem Druckbereich der Feldspritze mit Überdruck, wobei zwischen dem Druckbereich und dem Saugbereich eine Fördereinrichtung angeordnet ist. Alternativ oder zusätzlich kann das Verfahren das Ausbringen der in dem Druckbereich befindlichen und von der Fördereinrichtung mit Druck beaufschlagten Flüssigkeit auf eine landwirtschaftliche Nutzfläche und/oder das Ausbringen der in der Entleerungskammer befindlichen und durch die Druckluft mit Druck beaufschlagten Flüssigkeit auf eine landwirtschaftliche Nutzfläche umfassen. Das Ausbringen der in der Entleerungskammer befindlichen und durch die Druckluft mit Druck beaufschlagten Flüssigkeit und das Ausbringen der in dem Druckbereich befindlichen und von der Fördereinrichtung mit Druck beaufschlagten Flüssigkeit erfolgt vorzugsweise mittels einem oder mehreren Ausbringelementen, wie beispielsweise Spritzdüsen. Die Fördereinrichtung kann beispielsweise als Pumpe ausgebildet sein.

Das erfindungsgemäße Verfahren umfasst das selbsttätige Schalten eines Sicherheitsventils zum Verhindern einer Beaufschlagung des Saugbereichs mit Überdruck. Insbesondere umfasst das selbsttätige Schalten des Sicherheitsventils zum Verhindern einer Beaufschlagung des Saugbereichs mit Überdruck das selbsttätige Schließen des Sicherheitsventils bei Überschreitung eines Druckgrenzwertes in der Entleerungskammer und/oder das selbsttätige Öffnen des Sicherheitsventils bei Unterschreitung eines Druckgrenzwertes in der Entleerungskammer. Das selbsttätige Öffnen des Sicherheitsventils darf aber erst möglich sein, nachdem die Entleerung der Restmenge der Feldspritze durch eine Bedienperson eingeleitet worden ist. Das Sicherheitsventil ist vorzugsweise als Rückschlagventil, insbesondere als federbelastetes Rückschlagventil, ausgebildet.

Eine andere Ausführungsform des erfindungsgemäßen Verfahrens umfasst das Sperren der Fluidverbindung zwischen der Druckluftquelle und der Entleerungskammer und/oder das Freigeben der Fluidverbindung zwischen der Druckluftquelle und der Entleerungskammer. Das Sperren und/oder das Freigeben der Fluidverbindung zwischen der Druckluftquelle und der Entleerungskammer erfolgt vorzugsweise mittels eines Absperrventils, welches zwischen der Druckluftquelle und der Entleerungskammer angeordnet ist.

Weitere Einzelheiten der Erfindung sind der Figurenbeschreibung und den Zeichnungen zu entnehmen. Es zeigen
- Fig. 1: ein Ausführungsbeispiel der erfindungsgemäßen landwirtschaftlichen Feldspritze in einer schematischen Darstellung; und
- Fig. 2: Teile eines Ausführungsbeispiels der erfindungsgemäßen landwirtschaftlichen Feldspritze in einer Schnittdarstellung.

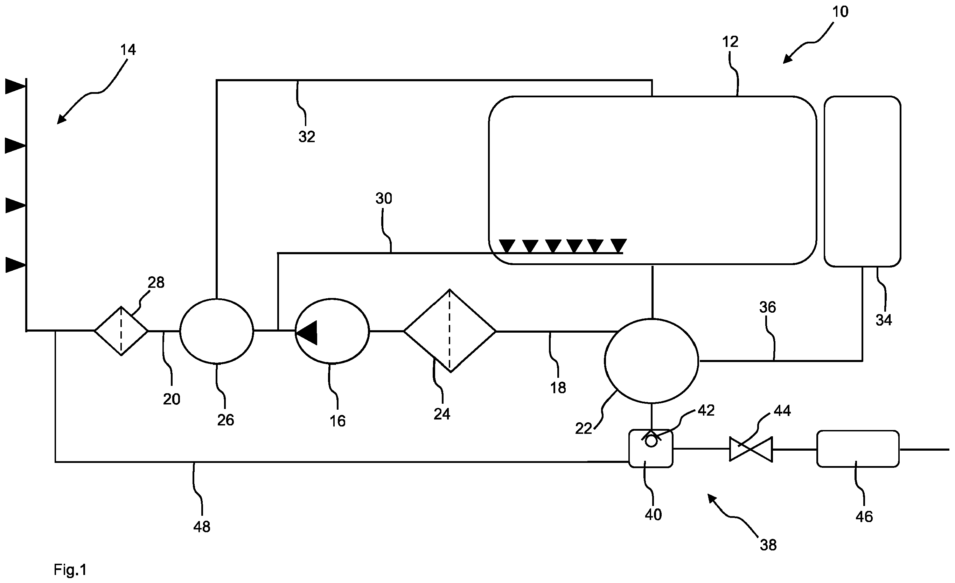

Die Fig. 1 zeigt eine landwirtschaftliche Feldspritze 10 mit einem Tank 12 zur Bevorratung von Flüssigkeit, insbesondere flüssigen Wirkstoffmitteln. Der Tank 12 ist über ein Leitungssystem mit mehreren Ausbringelementen 14 verbunden. Die Ausbringelemente 14 sind an einem einklappbaren Gestänge (nicht dargestellt) angeordnet und dazu eingerichtet, die Flüssigkeit aus dem Tank 12 auf eine landwirtschaftliche Nutzfläche auszubringen, wobei die Ausbringelemente 14 als Spritzdüsen ausgebildet sind.

Innerhalb des Leitungssystems ist eine als Pumpe ausgebildete Fördereinrichtung 16 angeordnet, welche das Leitungssystem in einen Saugbereich 18 und einen Druckbereich 20 unterteilt. Der Saugbereich 18 umfasst mehrere Saugleitungsabschnitte und ist dazu eingerichtet, Flüssigkeit aus dem Tank 12 anzusaugen. Der Druckbereich 20 umfasst mehrere Druckleitungsabschnitte und ist dazu eingerichtet, den Ausbringelementen 14 druckbeaufschlagte Flüssigkeit bereitzustellen.

Innerhalb des Saugbereichs 18 ist eine Durchflussregelarmatur 22 angeordnet, welche als Absperrhahn ausgebildet ist. Die Durchflussregelarmatur 22 weist zwei Fluideingänge und zwei Fluidausgänge auf. Der erste Fluideingang ist mit dem Tank 12 verbunden. Der zweite Fluideingang ist über die Verbindungsleitung 36 mit einem weiteren Tank 34, nämlich einem Spülwassertank, verbunden. Der erste Fluidausgang ist mit der Fördereinrichtung 16 verbunden. Der zweite Fluidausgang ist mit einer Entleerungseinrichtung 38 verbunden. Der Saugbereich 18 weist zwischen der Durchflussregelarmatur 22 und der Fördereinrichtung 16 eine Filtereinrichtung 24 auf. Innerhalb des Druckbereichs 20 ist ebenfalls eine Durchflussregelarmatur 26 angeordnet, welche als Absperrhahn ausgebildet ist. Die Durchflussregelarmatur 26 weist einen Fluideingang und zwei Fluidausgänge auf. Der Fluideingang ist mit der Fördereinrichtung 16 verbunden. Der erste Fluidausgang ist mit den Ausbringelementen 14 verbunden. Der zweite Fluidausgang ist über die Rückflussleitung 32 mit dem Tank 12 verbunden. Zwischen der Fördereinrichtung 16 und dem Durchflussregelarmatur 26 ist außerdem eine weitere Rückflussleitung 30 angeordnet. Zwischen der Durchflussregelarmatur 26 und den Ausbringelementen 14 ist außerdem eine Filtereinrichtung 28 angeordnet.

Die Entleerungseinrichtung 38 ist dazu eingerichtet, nach Beendigung eines Spritzvorgangs in dem Saugbereich 18 zurückbleibende Flüssigkeit aus dem Saugbereich 18 abzuführen. Hierzu weist die Entleerungseinrichtung 38 eine Entleerungskammer 40 auf, in welcher sich die aus dem Saugbereich 18 abgeführte Flüssigkeit sammelt. Die Entleerungskammer 40 weist ein Sicherheitsventil 42 auf und ist über ein Absperrventil 44 mit einer Druckluftquelle 46 verbunden. Das als Rückschlagventil ausgebildete Sicherheitsventil 42 verhindert eine Beaufschlagung des Saugbereichs 18 mit Überdruck, welcher sich innerhalb der Entleerungseinrichtung 38 ausbildet, wenn die Entleerungskammer 40 mit Druckluft der Druckluftquelle 46 beaufschlagt wird. Die Druckluftquelle 46 ist als Druckluftbehälter ausgebildet. Alternativ kann die Druckluftquelle 46 als Kompressor ausgebildet sein oder zusätzlich zum Druckluftbehälter einen Kompressor umfassen. Die Entleerungskammer 40 ist über die Verbindungsleitung 48 fluidleitend mit den Ausbringelementen 14 verbunden, wobei die in der Entleerungskammer 40 befindliche Flüssigkeit bei Druckbeaufschlagung durch die Druckluftquelle 46 den Ausbringelementen 14 zugeführt wird.

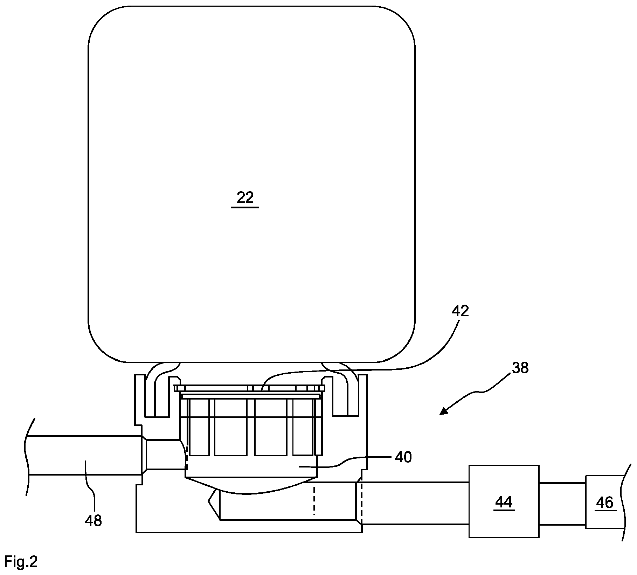

Die Fig. 2 zeigt, dass die Entleerungskammer 40 innerhalb eines Gehäuses der Entleerungseinrichtung 38 angeordnet ist. Die Entleerungskammer 40 ist über das Sicherheitsventil 42 mit einer Durchflussregelarmatur 22 verbunden, wobei die Durchflussregelarmatur 22 Bestandteil des Saugbereichs der zughörigen landwirtschaftlichen Feldspritze 10 ist. Das Sicherheitsventil 42 ist in das Gehäuse der Entleerungseinrichtung 38 integriert beziehungsweise eingesetzt.

Die Verbindungsleitung 48, welche nach der Beaufschlagung der Entleerungskammer 40 mit Druckluft ein Druckluft-Flüssigkeitsgemisch zu den Ausbringelementen (nicht dargestellt) transportiert, ist gegenüberliegend zu dem Leitungsabschnitt angeordnet, welcher die Entleerungskammer 40 über ein Absperrventil 44 mit einer Druckluftquelle 46 verbindet. Außerdem ist der mit der Druckluftquelle 46 verbundene Fluideingang der Entleerungskammer 40 unterhalb des mit den Ausbringelementen 14 verbundenen Fluidausgangs angeordnet. Die Druckluftquelle 46 ist als Druckluftbehälter ausgebildet. Alternativ kann die Druckluftquelle 46 als Kompressor ausgebildet sein oder zusätzlich zum Druckluftbehälter einen Kompressor umfassen.

### Bezugszeichenliste

- 10: landwirtschaftliche Feldspritze
- 12: Tank
- 14: Ausbringelemente
- 16: Fördereinrichtung
- 18: Saugbereich
- 20: Druckbereich
- 22: Durchflussregelarmatur
- 24: Filtereinrichtung
- 26: Durchflussregelarmatur
- 28: Filtereinrichtung
- 30: Rückflussleitung
- 32: Rückflussleitung
- 34: Tank
- 36: Verbindungsleitung
- 38: Entleerungseinrichtung
- 40: Entleerungskammer
- 42: Sicherheitsventil
- 44: Absperrventil
- 46: Druckluftquelle
- 48: Verbindungsleitung

## Patentansprüche

1. Landwirtschaftliche Feldspritze (10), mit
- einem Tank (12) zur Bevorratung von Flüssigkeit;
- einem Saugbereich (18), welcher einen oder mehrere Saugleitungsabschnitte umfasst und dazu eingerichtet ist, Flüssigkeit aus dem Tank (12) anzusaugen; und
- einer Entleerungseinrichtung (38), welche dazu eingerichtet ist, nach Beendigung eines Spritzvorgangs in dem Saugbereich (18) zurückbleibende Flüssigkeit aus dem Saugbereich (18) abzuführen; wobei die Entleerungseinrichtung (38) eine Entleerungskammer (40) aufweist, in welcher sich die aus dem Saugbereich (18) abgeführte Flüssigkeit sammelt und welche mit einer Druckluftquelle (46) verbunden ist, wobei die Entleerungskammer (40) über die Verbindung zu der Druckluftquelle (46) zum Abführen der Flüssigkeit aus der Entleerungskammer (40) mit Druckluft beaufschlagbar ist und derart angeordnet ist, dass die in dem Saugbereich zurückbleibende Flüssigkeit drucklos in die Entleerungskammer (40) fließt, mit einem Druckbereich (20), welcher ein oder mehrere Ausbringelemente (14) umfasst, wobei das eine oder die mehreren Ausbringelemente (14) dazu eingerichtet sind, die Flüssigkeit aus dem Tank (12) auf eine landwirtschaftliche Nutzfläche auszubringen und wobei zwischen dem Druckbereich (20) und dem Saugbereich (18) eine als Pumpe ausgebildete Fördereinrichtung (16) angeordnet ist, **dadurch gekennzeichnet, dass** die Entleerungseinrichtung (38) ein Sicherheitsventil (42) aufweist, welches dazu eingerichtet ist, eine Beaufschlagung des Saugbereichs (18) mit Überdruck zu verhindern, dass das Sicherheitsventil (42) als Rückschlagventil ausgebildet ist.

2. Landwirtschaftliche Feldspritze (10) nach Anspruch 1,
**dadurch gekennzeichnet, dass** zwischen der Druckluftquelle (46) und der Entleerungskammer (40) ein Absperrventil (44) angeordnet ist.

3. Landwirtschaftliche Feldspritze (10) nach einem der vorstehenden Ansprüche,
**dadurch gekennzeichnet, dass** die Druckluftquelle (46) als Druckluftbehälter oder als Druckluftversorgung ausgebildet ist.

4. Landwirtschaftliche Feldspritze (10) nach Anspruch 1,
**dadurch gekennzeichnet, dass** die Entleerungskammer (40) fluidleitend mit dem einen oder den mehreren Ausbringelementen (14) verbunden ist, wobei die in der Entleerungskammer (40) befindliche Flüssigkeit bei Druckbeaufschlagung durch die Druckluftquelle (46) dem einen oder den mehreren Ausbringelementen (14) zuführbar ist.

5. Verfahren zum Betreiben einer landwirtschaftlichen Feldspritze (10), mit den Schritten
- Ansaugen von Flüssigkeit aus einem Tank (12) der landwirtschaftlichen Feldspritze (10) in einen Saugbereich (18) der landwirtschaftlichen Feldspritze (10), welcher einen oder mehrere Saugleitungsabschnitte aufweist;
- Abführen von Flüssigkeit, welche nach Beendigung eines Spritzvorgangs in dem Saugbereich (18) zurückgeblieben ist, aus dem Saugbereich (18) mittels einer Entleerungseinrichtung (38) der landwirtschaftlichen Feldspritze (10); und
- Sammeln der aus dem Saugbereich (18) abgeführten Flüssigkeit in einer Entleerungskammer (40) der Entleerungseinrichtung (38); mit dem Schritt:
- Beaufschlagen der Entleerungskammer (40) mit Druckluft, weiter mit zumindest einem der folgenden Schritte:
- Beaufschlagen der Flüssigkeit in einem Druckbereich (20) der Feldspritze (10) mit Überdruck, wobei zwischen dem Druckbereich (20) und dem Saugbereich (18) eine Fördereinrichtung (16) angeordnet ist;
- Ausbringen der in dem Druckbereich (20) befindlichen und von der Fördereinrichtung (16) mit Druck beaufschlagten Flüssigkeit auf eine landwirtschaftliche Nutzfläche;
- Ausbringen der in der Entleerungskammer (40) befindlichen und durch die Druckluft mit Druck beaufschlagten Flüssigkeit auf eine landwirtschaftliche Nutzfläche,
**gekennzeichnet durch** den Schritt:
- selbsttätiges Schalten eines Sicherheitsventils (42) zum Verhindern einer Beaufschlagung des Saugbereichs (18) mit Überdruck,
wobei das selbsttätige Schalten des Sicherheitsventils (42) zum Verhindern einer Beaufschlagung des Saugbereichs (18) mit Überdruck vorzugsweise zumindest einen der folgenden Schritte umfasst:
- selbsttätiges Schließen des Sicherheitsventils (42) bei Überschreitung eines Druckgrenzwertes in der Entleerungskammer (40);
- selbsttätiges Öffnen des Sicherheitsventils (42) bei Unterschreitung eines Druckgrenzwertes in der Entleerungskammer (40).

6. Verfahren nach Anspruch 5,
**gekennzeichnet durch** zumindest einen der folgenden Schritte:
- Sperren der Fluidverbindung zwischen der Druckluftquelle (46) und der Entleerungskammer (40);
- Freigeben der Fluidverbindung zwischen der Druckluftquelle (46) und der Entleerungskammer (40).

## Claims

1. Agricultural field spraying device (10), having
- a tank (12) for storing liquid;
- a suction region (18), which comprises one or more suction line sections and is designed to suck up liquid out of the tank (12); and
- an emptying device (38), which is designed to remove liquid remaining in the suction region (18) from the suction region (18) after a spraying operation is ended;
**characterized in that** the emptying device (38) has an emptying chamber (40), in which the liquid removed from the suction region (18) collects and which is connected to a compressed air source (46), wherein the emptying chamber (40) can be charged with compressed air via the connection to the compressed air source (46) in order to remove the liquid from the emptying chamber (40) and is arranged in such a manner that the liquid remaining back in the suction region flows pressurelessly into the emptying chamber (40), **characterized by** a pressure region (20), which comprises one or more discharge elements (14), wherein the one or more discharge elements (14) are designed to discharge the liquid from the tank (12) over an agricultural area, and wherein a conveying device (16) in the form of a pump is arranged between the pressure region (20) and the suction region (18), **in that** the emptying device (38) has a safety valve (42) which is designed to prevent the suction region (18) being charged with positive pressure, **in that** the safety valve (42) is in the form of a nonreturn valve.

2. Agricultural field spraying device (10) according to Claim 1, **characterized in that** a shut-off valve (44) is arranged between the compressed air source (46) and the emptying chamber (40).

3. Agricultural field spraying device (10) according to either of the preceding claims, **characterized in that** the compressed air source (46) is in the form of a compressed air container or in the form of a compressed air supply.

4. Agricultural field spraying device (10) according to Claim 1, **characterized in that** the emptying chamber (40) is connected in a fluid-conducting manner to the one or more discharge elements (14), wherein the liquid located in the emptying chamber (40) can be supplied upon charging with pressure by the compressed air source (46) to the one or more discharge elements (14).

5. Method for operating an agricultural field spraying device (10), with the steps of
- sucking up liquid from a tank (12) of the agricultural field spraying device (10) into a suction region (18) of the agricultural field spraying device (10), which suction region has one or more suction line sections;
- removing liquid which has remained in the suction region (18) after a spraying operation is ended from the suction region (18) by means of an emptying device (38) of the agricultural field spraying device (10); and
- collecting the liquid removed from the suction region (18) in an emptying chamber (40) of the emptying device (38);
**characterized by** the step of:
- charging the emptying chamber (40) with compressed air,
further **characterized by** at least one of the following steps:
- charging the liquid with positive pressure in a pressure region (20) of the field spraying device (10), wherein the conveying device (16) is arranged between the pressure region (20) and the suction region (18);
- discharging the liquid located in the pressure region (20) and pressurized by the conveying device (16) over an agricultural area;
- discharging the liquid located in the emptying chamber (40) and pressurized by the compressed air over an agricultural area,
further **characterized by** the step of:
- automatically switching a safety valve (42) to prevent the suction region (18) being charged with positive pressure,
wherein the automatic switching of the safety valve (42) for preventing the suction region (18) from being charged with positive pressure preferably comprises at least one of the following steps:
- automatically closing the safety valve (42) when a pressure unit value in the emptying chamber (40) is exceeded;
- automatically opening the safety valve (42) when a pressure unit value in the emptying chamber (40) is fallen short of.

6. Method according to Claim 5,
**characterized by** at least one of the following steps:
- blocking the fluid connection between the compressed air source (46) and the emptying chamber (40);
- releasing the fluid connection between the compressed air source (46) and the emptying chamber (40).

## Revendications

1. Pulvérisateur agricole (10), comprenant
- un réservoir (12) pour stocker un liquide ;
- une zone d'aspiration (18) qui comprend un ou plusieurs tronçons de conduite d'aspiration et est aménagée pour aspirer du liquide à partir du réservoir (12) ; et
- un dispositif de vidange (38) qui est aménagé pour évacuer de la zone d'aspiration (18) du liquide restant dans la zone d'aspiration (18) lorsqu'une opération de pulvérisation est terminée ;
**caractérisé en ce que** le dispositif de vidange (38) présente une chambre de vidange (40) dans laquelle s'accumule le liquide évacué depuis la zone d'aspiration (18) et qui est reliée à une source d'air comprimé (46), la chambre de vidange (40) pouvant être alimentée en air comprimé par la connexion à la source d'air comprimé (46) pour évacuer le liquide depuis la chambre de vidange (40), et étant disposée de telle sorte que le liquide restant dans la zone d'aspiration s'écoule sans pression dans la chambre de vidange (40), **caractérisé par** une zone de pression (20) comprenant un ou plusieurs éléments d'épandage (14), les un ou plusieurs éléments d'épandage (14) étant aménagés pour épandre le liquide du réservoir (12) sur une surface agricole utile, et dans lequel entre la zone de pression (20) et la zone d'aspiration (18) un dispositif d'extraction (16) réalisé sous forme de pompe est disposé, **en ce que** le dispositif de vidange (38) présente une soupape de sécurité (42) qui est aménagée pour empêcher une alimentation en surpression de la zone d'aspiration (18), **en ce que** la soupape de sécurité (42) est réalisée sous forme de soupape de retenue.

2. Pulvérisateur agricole (10) selon la revendication 1, **caractérisé en ce qu'**une soupape d'arrêt (44) est disposée entre la source d'air comprimé (46) et la chambre de vidange (40).

3. Pulvérisateur agricole (10) selon l'une quelconque des revendications précédentes, **caractérisé en ce que** la source d'air comprimé (46) est réalisée sous forme de réservoir à air comprimé ou de source d'air comprimé.

4. Pulvérisateur agricole (10) selon la revendication 1, **caractérisé en ce que** la chambre de vidange (40) est reliée en communication fluidique aux un ou plusieurs éléments d'épandage (14), le liquide qui se trouve dans la chambre de vidange (40) pouvant être ramené aux un ou plusieurs éléments d'épandage (14) par l'intermédiaire de la source d'air comprimé (46).

5. Procédé d'exploitation d'un pulvérisateur agricole (10), comprenant les étapes consistant à
- aspirer un liquide à partir d'un réservoir (12) du pulvérisateur agricole (10) dans une zone d'aspiration (18) du pulvérisateur agricole (10) qui présente un ou plusieurs tronçons de conduite d'aspiration ;
- évacuer le liquide qui est resté dans la zone d'aspiration (18) lorsqu'une opération de pulvérisation est terminée hors de la zone d'aspiration (18) au moyen d'un dispositif de vidange (38) du pulvérisateur agricole (10) ; et
- collecter le liquide évacué hors de la zone d'aspiration (18) dans une chambre de vidange (40) du dispositif de vidange (38) ;
**caractérisé par** l'étape consistant à :
- alimenter la chambre de vidange (40) en air comprimé,
en outre **caractérisé par** au moins l'une des étapes suivantes consistant à :
- alimenter en surpression le liquide dans une zone de pression (20) du pulvérisateur agricole (10), un dispositif d'extraction (16) étant disposé entre la zone de pression (20) et la zone d'aspiration (18) ;
- épandre sur une surface agricole utile le liquide qui se trouve dans la zone de pression (20) et qui est alimenté en pression par le dispositif d'extraction (16) ;
- épandre sur une surface agricole utile le liquide qui se trouve dans la chambre de vidange (40) et qui est alimenté en pression par l'air comprimé,
en outre **caractérisé par** l'étape suivante :
- la commutation automatique d'une soupape de sécurité (42) pour empêcher une alimentation en surpression de la zone d'aspiration (18),
dans lequel la commutation automatique de la soupape de sécurité (42) pour empêcher l'alimentation en surpression de la zone d'aspiration (18) comprend de préférence au moins l'une des étapes suivantes :
- la commutation automatique de la soupape de sécurité (42) en cas de dépassement d'une valeur limite de pression dans la chambre de vidange (40) ;
- l'ouverture automatique de la soupape de sécurité (42) en cas de soupassement d'une valeur limite de pression dans la chambre de vidange (40).

6. Procédé selon la revendication 5, **caractérisé par** au moins l'une des étapes suivantes consistant à :
- bloquer la communication fluidique entre la source d'air comprimé (46) et la chambre de vidange (40) ;
- débloquer la communication fluidique entre la source d'air comprimé (46) et la chambre de vidange (40) .
